# EUROPEAN PATENT APPLICATION

(11) **EP 4 836 000 A1**
(43) Date of publication of application: **04.11.2026**
(21) Application number: 24875662.9
(22) Date of filing: 30.12.2024
(51) Int. Cl.: H01M 4/525, H01M 4/505, C01G 53/00

(54) **OPTIMIZED REPAIRING METHOD FOR CRACKS ON SURFACE OF PRECURSOR OF POSITIVE ELECTRODE MATERIAL**

(30) Priority: 21.08.2024 CN 202411146602
(71) Applicant: Henan Kelong New Energy Co., Ltd, Xinxiang, Henan 453000 (CN)
(72) Inventor: XU, Yunjun, Xinxiang, Henan 453000 (CN); CHENG, Di, Xinxiang, Henan 453000 (CN); WANG, Wen, Xinxiang, Henan 453000 (CN); WANG, Yanping, Xinxiang, Henan 453000 (CN); YIN, Zhengzhong, Xinxiang, Henan 453000 (CN); LIU, Debao, Xinxiang, Henan 453000 (CN)
(74) Representative: Studio Torta S.p.A.
(86) International application number: PCT/CN2024/144035
(87) International publication number: WO 2026/040303

(57) **Abstract**

Provided is an optimized repair method for surface cracks of a cathode material precursor. The method includes stopping a reaction when the cathode material precursor grows to a target D50, decreasing a stirring rotation speed, raising the temperature, and adding a repair solution and a mixed solution of an ammonia solution and an ammonium sulfate solution to perform optimized repair on the cracks for 24-48 h. The optimized repair method for cracks of the present application can achieve complete repair of the surface cracks of the cathode material precursor through two surface crack repair processes, thereby increasing the qualification rate of the cathode material precursor. Moreover, an impact on the performance of a cathode material due to sphere cracking of the cathode material precursor can be effectively avoided.

## Description

The present application claims the priority of a Chinese patent application No. 2024111466028 filed on August 21, 2024. The entire contents of the Chinese patent application are incorporated into the present application by reference.

### Technical Field

The present application relates to the technical field of high-nickel cathode material precursors, in particular to an optimized repair method for surface cracks of a cathode material precursor.

### Background

With the development of society and changes in lifestyle, requirements for lithium-ion batteries are increasingly higher. To meet ever-increasing demands for portable electronic products, electric vehicles and large-scale energy storage equipment, it is urgent to develop cathode materials with high energy density, long cycle service life and high safety. Due to higher specific capacity, high-nickel cathode materials have become one of the most promising cathode materials.

Due to a relatively high nickel content, high-nickel cathode material precursors have smaller primary particles on surfaces than low-nickel precursors and have higher sphericity, and the phenomenon of cracks often occurs on the surfaces of spheres. When the high-nickel anode materials are sintered, the situation of cracking of the spheres often occurs, which affects the performance of the cathode materials, thus leading to decrease of the performance of the lithium-ion batteries.

A Chinese application No. CN116789190A discloses a repair method for cracks of a cathode material precursor. The repair method includes the following steps: when the particle size of the cathode material precursor reaches a target particle size in the process of preparing the cathode material precursor by a co-precipitation reaction, subjecting the reaction system to standing, and then removing a supernatant obtained after the standing and layering to obtain a paste to be repaired; mixing an alkaline solution with the paste to be repaired, and continuously mixing with a thickener, wherein an alkaline substance in the alkaline solution includes a combination of any one or at least two of sodium hydroxide, sodium carbonate, or sodium bicarbonate, and the thickener includes a combination of any one or at least two of carboxymethyl cellulose sodium, sodium polyacrylate, or sodium alginate; and performing heating for crack repair. The repair method provided by the Chinese application can repair cracks on surfaces of large-particle precursors and high-nickel precursors, which effectively increases the product qualification rate. However, according to the repair method for surface cracks of a cathode material reported in the Chinese application, surface crack repair is performed once only in an alkali addition process, a part of the cathode material precursor material still has surface crack defects after the repair is completed, and the repair is not perfect and thorough. Therefore, it is necessary to optimize and perfect the repair method in the patent document to better increase the product qualification rate.

### Summary

The main objective of the present application is to provide an optimized repair method for surface cracks of a cathode material precursor. By repairing the surface cracks of the cathode material precursor, the goal of sintering a high-nickel cathode material without cracking is achieved, thereby optimizing the performance of the cathode material.

The present application provides an optimized repair method for surface cracks of a cathode material precursor. The method includes stopping a reaction when the cathode material precursor grows to a target D50, decreasing a stirring rotation speed, raising the temperature, and adding a repair solution and a mixed solution of an ammonia solution and an ammonium sulfate solution to perform optimized repair on the cracks for 24-48 h. The optimized repair method for cracks of the present application can achieve complete repair of the surface cracks of the cathode material precursor through two surface crack repair processes, thereby increasing the qualification rate of the cathode material precursor. Moreover, an impact on the performance of a cathode material due to sphere cracking of the cathode material precursor can be effectively avoided.

To solve the aforementioned technical problems, the present application adopts the following technical solution: an optimized repair method for surface cracks of a cathode material precursor, which includes the following specific steps:
step S1, when the particle size of the cathode material precursor reaches a target particle size in the process of preparing the cathode material precursor by a co-precipitation reaction, stopping the reaction to obtain a material in a reactor as a material to be repaired;
step S2, introducing an inert protective gas into the reactor to make an oxygen content in the reactor lower than 1.5%;
step S3, decreasing a rotation speed of the reactor while raising the temperature of the reactor to 55-85°C;
step S4, adding a repair solution into the reactor to perform first surface crack repair on the material to be repaired, wherein the repair solution is a mixed solution of an alkaline solution and an antioxidant solution, the alkaline solution includes one or more of a sodium hydroxide solution, a potassium hydroxide solution, a sodium carbonate solution, or a sodium bicarbonate solution, and the antioxidant solution includes one or more of a sodium thiosulfate solution, a vitamin C solution, a sodium D-isoascorbate solution, an oxalic acid solution, a potassium borohydride solution, a sodium borohydride solution, or an ethanol solution; and
step S5, adding a mixed solution of an ammonia solution and an ammonium sulfate solution into the reactor to perform second surface crack repair on the material to be repaired.

Further, in step S1, a chemical formula of the cathode material precursor is NiₓCo_{y}Mn_{1-x-y}M_{z}(OH)₂, wherein M is a doping element, M is selected from one or more of Ca, Mg, Zn, Co, Cu, Ti, Al, Sn, Zr, Mn, B, Sr, V, Cr, La, Yb, Ce, or Ac, 0 < x ≤ 0.9,0 < y ≤ 0.9,0 ≤ z ≤ 0.9.

Further, in step S2, the inert protective gas includes one or more of nitrogen, helium, or argon.

Further, in step S3, the rotation speed of the reactor is decreased to a linear speed of 80-150 rpm based on an original rotation speed of the reactor.

Further, in step S4, a feed ratio of the repair solution to the material to be repaired is 1-4 mL:1 L.

Further, in step S4, a concentration of the alkaline solution in the repair solution is 8-10 mol/L.

Further, in step S4, a concentration of the antioxidant in the repair solution is 3-5 mol/L.

Further, in step S4, a volume percentage content of the alkaline solution in the repair solution is 20-80%, and the balance is the antioxidant.

Further, in step S4, a time of the first surface crack repair is 12-36 h.

Further, in step S5, a feed ratio of the mixed solution of the ammonia solution and the ammonium sulfate solution to the material to be repaired is 10-50 mL:1 L.

Further, in step S5, a volume percentage content of the ammonia solution in the mixed solution of the ammonia solution and the ammonium sulfate solution is 10-30%, and the balance is the ammonium sulfate solution.

Further, in step S5, a concentration of the ammonia solution is 8-12 mol/L.

Further, in step S5, a concentration of the ammonium sulfate solution is 1-3 mol/L.

Further, in step S5, a time of the second surface crack repair is 12-36 h.

Further, in step S5, a D50 of the cathode material precursor after the second surface crack repair is 4-20 µm, particle size distribution satisfies (D90-D10)/D50<0.70, a tap density is greater than 1.80 g/cm³, a specific surface area is 5-15 m²/g, and a porosity is 10-60%.

Compared with the prior art, the present application has the following advantages and beneficial effects.
1. According to the present application, when the situation of sphere cracking is found in the reaction process of the cathode material precursor, there is no need to adopt the way of adjusting process conditions to reduce the situation of sphere cracking, feeding is stopped when the reaction is directly carried out to reach the target particle size, and then the surface cracks of spheres of the cathode material precursor are completely repaired by adopting nitrogen protection, decreasing the rotation speed of the reactor, raising the temperature of the reactor, adding the repair solution and the mixed solution of the ammonia solution and the ammonium sulfate solution and other ways.
2. According to the present application, by adding the repair solution in the first surface crack repair process, hydroxide ions in the repair solution can enter gaps between the spheres of the cathode material precursor and bind to residual metal ions attached to the surfaces of the spheres of the cathode material precursor to make the surfaces of the spheres of the cathode material precursor tightly bound, thereby achieving the purpose of repairing the surface cracks of the cathode material precursor. By adding the antioxidant solution, oxidation and changes in performance indexes of the cathode material precursor caused by long-term aging can be effectively avoided, and meanwhile an impact on the performance of a cathode material caused by collapse and sphere cracking of the cathode material precursor and destruction of the original spherical particle morphology of the precursor material can be effectively avoided.
3. According to the present application, by adding the mixed solution of the ammonia solution and the ammonium sulfate solution in the second surface crack repair process, residual metal ions in a mother solution can be better complexed with hydroxide radicals, such that the surfaces of the spheres of the cathode material precursor are tighter, and the surface cracks of the cathode material precursor are better beautified and completely repaired. Moreover, after the second surface crack repair process, the surface cracks of the cathode material precursor can be repaired more completely and perfectly, thereby effectively increasing the qualification rate of the cathode material precursor.
4. In a finished product of the cathode material precursor prepared after the final surface crack repair in the present application, the D50 is 4-20 µm, the particle size distribution satisfies (D90-D10)/D50<0.70, the tap density is greater than 1.80 g/cm³, the specific surface area is 5-15 m²/g, and the porosity is 10-60%.

### Brief Description of the Drawings

Drawings attached to the specification that form a part of the present application are used to provide further understanding of the present application, and schematic examples of the present application and description thereof are used to interpret the present application and are not intended to constitute improper limitations to the present application. In the figures:
FIG. 1 is an SEM image of a cathode material precursor before surface repair in Example 1.
FIG. 2 is an SEM image of the cathode material precursor after surface repair in Example 1.
FIG. 3 is an SEM image of a cathode material precursor before surface repair in Example 2.
FIG. 4 is an SEM image of the cathode material precursor after surface repair in Example 2.
FIG. 5 is an SEM image of a cathode material precursor after surface repair in Comparative Example 1.
FIG. 6 is an SEM image of a cathode material precursor after surface repair in Comparative Example 2.
FIG. 7 is an SEM image of a cathode material precursor after surface repair in Comparative Example 3.

### Detailed Description of the Embodiments

It should be noted that examples in the present application and features in the examples can be combined with each other without conflict. The present application is described in detail below with reference to the drawings and in conjunction with the examples.

As described in the background of the present application, the prior art has the problem that surface cracks of cathode material precursors are repaired incompletely. To solve the aforementioned problem, in a typical embodiment of the present application, an optimized repair method for surface cracks of a cathode material precursor is provided. The method includes the following specific steps: step S1, when the particle size of the cathode material precursor reaches a target particle size in the process of preparing the cathode material precursor by a co-precipitation reaction, stopping the reaction to obtain a material in a reactor as a material to be repaired; step S2, introducing an inert protective gas into the reactor to make an oxygen content in the reactor lower than 1.5%; step S3, decreasing a rotation speed of the reactor while raising the temperature of the reactor to 55-85°C; step S4, adding a repair solution into the reactor to perform first surface crack repair on the material to be repaired, wherein the repair solution is a mixed solution of an alkaline solution and an antioxidant solution, the alkaline solution includes one or more of a sodium hydroxide solution, a potassium hydroxide solution, a sodium carbonate solution, or a sodium bicarbonate solution, and the antioxidant solution includes one or more of a sodium thiosulfate solution, a vitamin C solution, a sodium D-isoascorbate solution, an oxalic acid solution, a potassium borohydride solution, a sodium borohydride solution, or an ethanol solution; and step S5, adding a mixed solution of an ammonia solution and an ammonium sulfate solution into the reactor to perform second surface crack repair on the material to be repaired.

Specifically, in the present application, when the situation of sphere cracking is found in the process of preparing the cathode material precursor by the co-precipitation reaction, there is no need to adopt the way of adjusting process conditions to reduce the situation of sphere cracking, feeding is stopped when the reaction is directly carried out to reach the target particle size, and the material in the reactor is the material to be repaired. Then, the inert protective gas is introduced into the reactor to reduce the oxygen content in the reactor, the rotation speed of the reactor is decreased while the temperature of the reactor is raised to 55-85°C, and then two-step repair is performed.

First, by adding the repair solution, that is, the mixed solution of the alkaline solution and the antioxidant solution, into the reactor to perform the first surface crack repair on the material to be repaired, hydroxide ions in the repair solution can enter gaps between spheres of the cathode material precursor and bind to residual metal ions attached to the surfaces of the spheres of the cathode material precursor to make the surfaces of the spheres of the cathode material precursor tightly bound, thereby achieving the purpose of repairing the surface cracks of the cathode material precursor. By adding the antioxidant solution, oxidation and changes in performance indexes of the cathode material precursor caused by long-term aging can be effectively avoided, and meanwhile an impact on the performance of a cathode material caused by collapse and sphere cracking of the cathode material precursor and destruction of the original spherical particle morphology of the precursor material can be effectively avoided.

Then, by adding the mixed solution of the ammonia solution and the ammonium sulfate solution into the reactor to perform the second surface crack repair on the material to be repaired, residual metal ions in a mother solution can be better complexed with hydroxide radicals, such that the surfaces of the spheres of the cathode material precursor are tighter, and the surface cracks of the cathode material precursor are better beautified and completely repaired. Moreover, after the second surface crack repair process, the surface cracks of the cathode material precursor can be repaired more completely and perfectly, thereby effectively increasing the qualification rate of the cathode material precursor.

In a preferred embodiment, in step S1, a chemical formula of the cathode material precursor is NiₓCo_{y}Mn_{1-x-y}M_{z}(OH)₂, wherein M is a doping element, M is selected from one or more of Ca, Mg, Zn, Co, Cu, Ti, Al, Sn, Zr, Mn, B, Sr, V, Cr, La, Yb, Ce, or Ac, 0 < x ≤ 0.9,0 < y ≤ 0.9,0 ≤ z ≤ 0.9. By precisely controlling the ratio of Ni, Co and Mn, the electrochemical performance of the material can be further optimized, the structural stability is enhanced, and the formation of cracks is reduced. The doping element can further improve the cycle stability and safety of the material, which is conducive to more effective repair of the cathode material precursor in the subsequent crack repair process, thereby increasing the overall quantification rate and maintaining or even improving the performance of a cathode material.

The inert protective gas is an indispensable safeguard measure in the repair method. In a preferred embodiment, in step S2, the inert protective gas includes one or more of nitrogen, helium, or argon. The protective gas can more effectively isolate oxygen, reduce the oxidation of the cathode material precursor in the repair process, maintain the original performance of the material, and improve the high efficiency and thoroughness of the repair process.

In a preferred embodiment, in step S3, the rotation speed of the reactor is decreased to a linear speed of 80-150 rpm based on an original rotation speed of the reactor. Convenience is provided for decreasing a collision force between particles and avoiding further damage to the cathode material precursor in the repair process, especially the existing surface cracks. The low rotation speed is also conducive to more uniform and gentle contact between the repair solution and the surface of the cathode material precursor and promoting deep repair of the cracks.

To further increase the qualification rate of the material after the repair and maintain good performance, in a preferred embodiment, in step S4, a feed ratio of the repair solution to the material to be repaired is 1-4 mL:1 L. At the above ratio, the repair solution can more fully come into contact with each particle of the cathode material precursor, especially a crack area. An appropriate amount of the repair solution can evenly cover the surfaces of the particles, promote the proceeding of a repair reaction, and reduce the possibility of adhesion or collapse between particles brought by too high humidity of the material caused by the excessive liquid, or the possibility of failure to effectively repair all the cracks caused by the insufficient repair solution.

In a preferred embodiment, in step S4, a concentration of the alkaline solution in the repair solution is 8-10 mol/L. By setting the concentration of the alkaline solution in the repair solution within the above range, a higher concentration of hydroxide ions can be provided, enhancement of the permeability of the repair solution is facilitated to make the repair solution enter the small cracks more effectively to complete the repair, meanwhile the problem is reduced that the electrochemical performance of the material is affected by an uneven coating layer formed by an overreaction on the surface that may be caused at a too high concentration, and a better repair effect of the cracks can be achieved.

In the crack repair process, exposure to the environment may accelerate the oxidation of the material, thereby affecting the electrochemical stability and the energy density. Therefore, in a preferred embodiment, in step S4, a concentration of the antioxidant in the repair solution is 3-5 mol/L. By setting the concentration of the antioxidant in the repair solution within the above range, the contact between oxygen and the surface of the material can be further prevented, the electrochemical stability of the material is maintained, the qualification rate is increased, and meanwhile a negative impact that may be caused to the performance of the material at an excessive addition amount is reduced.

In a preferred embodiment, in step S4, a volume percentage content of the alkaline solution in the repair solution is 20-80%, and the balance is the antioxidant. More convenience is provided for achieving a double effect of crack repair and material protection. The alkaline solution at a high content can promote the crack repair more effectively, and meanwhile the antioxidant at the proportion is conducive to protecting the material from damage by oxidation in the repair process. By adjusting the ratio of the alkaline solution to the antioxidant, the structural stability and electrochemical performance of the cathode material precursor can be maintained without introducing new defects in the repair process while the cracks are repaired, thereby improving the repair effect and the performance of the material after the repair.

When the repair time is too short, the cracks may be unable to be completely sealed, thus affecting the repair effect. When the repair time is too long, unnecessary reactions, such as excessive alkalization or excessive consumption of the antioxidant, may be caused, thus leading to a negative impact on the performance of the material. Therefore, in a preferred embodiment, in step S4, a time of the first surface crack repair is 12-36 h. According to a formula of the repair solution, reaction conditions and characteristics of the cathode material precursor, in the present application, the repair time is preferably limited within the above range to promote the complete repair of the cracks, increase the qualification rate of the material after the repair, and meanwhile maintain good performance, thereby providing a solid foundation for the subsequent second repair. When the particle size of the cathode material precursor is relatively large, the repair time may be appropriately prolonged.

In a preferred embodiment, in step S5, a feed ratio of the mixed solution of the ammonia solution and the ammonium sulfate solution to the material to be repaired is 10-50 mL:1 L. By optimizing the above ratio, the second repair solution can be more adequately and evenly covered on the surface of the cathode material precursor, thereby promoting the repair of the surface cracks of particles. An appropriate amount of the mixed solution can deeply enter the cracks to form stable complexes, thereby repairing the cracks, reducing an overreaction on the surface of the material or the waste of the solution caused by the excessive solution, and facilitating the improvement of the repair efficiency and the performance of a final product.

For the purpose of more facilitating the complete repair of the surface cracks of the cathode material precursor and the increase of the qualification rate, in a preferred embodiment, in step S5, a volume percentage content of the ammonia solution in the mixed solution of the ammonia solution and the ammonium sulfate solution is 10-30%, and the balance is the ammonium sulfate solution. The ammonia solution at the above concentration can provide sufficient ammonium ions, and these ions can bind to metal ions on the surface of the cathode material precursor to form stable complexes to seal the cracks and optimize the surface structure, thereby reducing the decrease of the performance of the material caused by an overreaction on the surface at a too high ammonia concentration while the repair effect is ensured.

For similar reasons, in a preferred embodiment, in step S5, a concentration of the ammonia solution is 8-12 mol/L.

In a preferred embodiment, in step S5, a concentration of the ammonium sulfate solution is 1-3 mol/L. The ammonium sulfate solution is used to provide additional ammonium ions and sulfate ions in the repair, and these ions can achieve a synergistic effect with the ammonium ions in the ammonia solution to optimize the repair effect. By setting the concentration of the ammonium sulfate solution within the above range, the effect of the ammonium sulfate solution in the repair process can be maximized, meanwhile the surface structure change and performance loss of the material caused at a too high concentration are reduced, and adequate complexation of the ammonium ions in the repair solution and the metal ions on the surface of the cathode material precursor is promoted, thereby improving the depth and thoroughness of repair.

To promote adequate proceeding of the repair reaction and make the ions in the ammonia solution and the ammonium sulfate solution have enough time to deeply enter the surface cracks of the cathode material precursor to form stable complexes and to repair the cracks more thoroughly, in a preferred embodiment, in step S5, a time of the second surface crack repair is 12-36 h. When the time is too short, the repair may be unable to be completed. When the time is too long, unnecessary side reactions may be caused, thus affecting the performance of the material. By setting the time within the above range, improvement of the thoroughness and high efficiency of the repair of the surface cracks of the cathode material precursor is facilitated, decrease of the performance caused by incomplete repair is reduced, meanwhile the energy consumption and cost in the repair process can be controlled, and the production efficiency is improved. When the particle size of the cathode material precursor is relatively large, the repair time may be appropriately prolonged.

As mentioned above, the method of the present application can achieve thorough repair of the surface cracks of the spheres of the cathode material precursor without causing a negative impact on the performance of a cathode material, thereby facilitating the application in batteries. Specifically, in a preferred embodiment, in step S5, a D50 of the cathode material precursor after the second surface crack repair is 4-20 µm, particle size distribution satisfies (D90-D10)/D50<0.70, a tap density is greater than 1.80 g/cm³, a specific surface area is 5-15 m²/g, and a porosity is 10-60%.

The above contents of the present application are further described in detail below through examples, but it should not be understood that the scope of the above contents of the present application is only limited to the following examples. All technologies that are achieved based on the above contents of the present application fall within the scope of the present application.

### Example 1

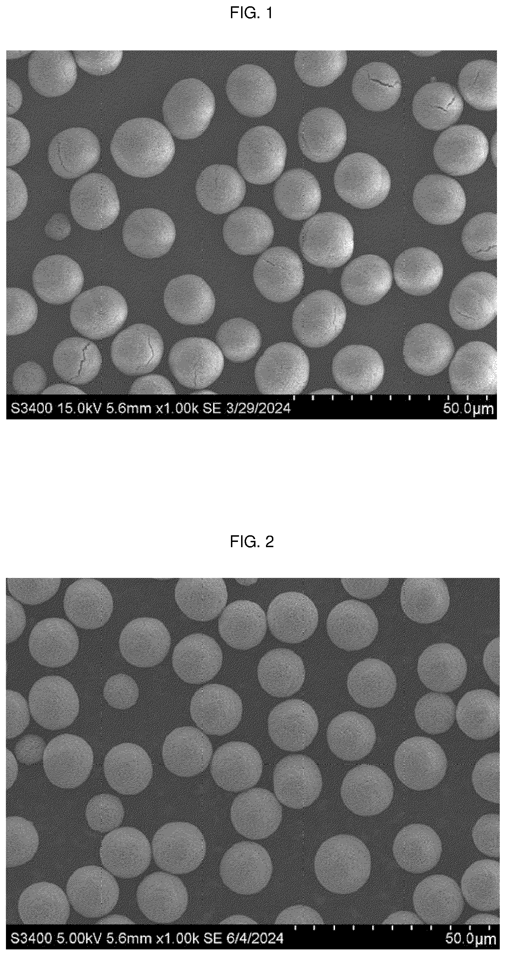

The present example provides an optimized repair method for cracks of a cathode material precursor. The cathode material precursor was a nickel-cobalt-manganese hydroxide precursor, and a molar ratio of Ni, Co and Mn was 92:5:3. The repair method included the following steps.
(1) When the particle size of the cathode material precursor in a reactor reached a D50 of 13 µm (an SEM image of the cathode material precursor before repair was shown in FIG. 1), feeding was stopped, stirring was turned off, nitrogen protection was turned on to make an oxygen content in the reactor lower than 1.5%, a stirring rotation speed of the reactor was decreased to 120 rpm, and the temperature of the reactor was raised to 65°C.
(2) A repair solution, that is, a mixed solution of a sodium hydroxide solution and an ascorbic acid solution, was added into the reactor to perform first surface crack repair on a material to be repaired, wherein a feed ratio of the repair solution to the material to be repaired was 3 mL:1 L, a concentration of the alkaline solution in the repair solution was 9 mol/L, a concentration of the antioxidant in the repair solution was 4 mol/L, a volume ratio of the sodium hydroxide solution to the ascorbic acid solution was 4:1 to make a concentration of hydroxide ions in the mixed system reach 0.5 g/L, and a time of the first surface crack repair was 24 h.
(3) An ammonia solution at a concentration of 9 mol/L and an ammonium sulfate solution at a concentration of 3 mol/L were added into the reactor to perform second surface crack repair on the material to be repaired, wherein a feed ratio of the mixed solution of the ammonia solution and the ammonium sulfate solution to the material to be repaired was 30 mL:1 L, and a volume ratio of the ammonia solution to the ammonium sulfate solution was 3:7 to make a concentration of ammonium ions in the mixed system maintained at 5 g/L, that is, the ammonia concentration under reaction conditions.
(4) Optimized repair was performed on the cracks for 32 h at a temperature of 65°C and a stirring rate of 120 rpm, and the repair was stopped when the surface cracks of the cathode material precursor disappeared (an SEM image of the cathode material precursor after repair was shown in FIG. 2).

As can be seen from the comparison between FIG. 1 and FIG. 2, the surface cracks of the cathode material precursor after repair completely disappear, and the spherical particle morphology is still maintained good, indicating that the repair method provided in the present example has a good optimized repair effect on the cracks.

### Example 2

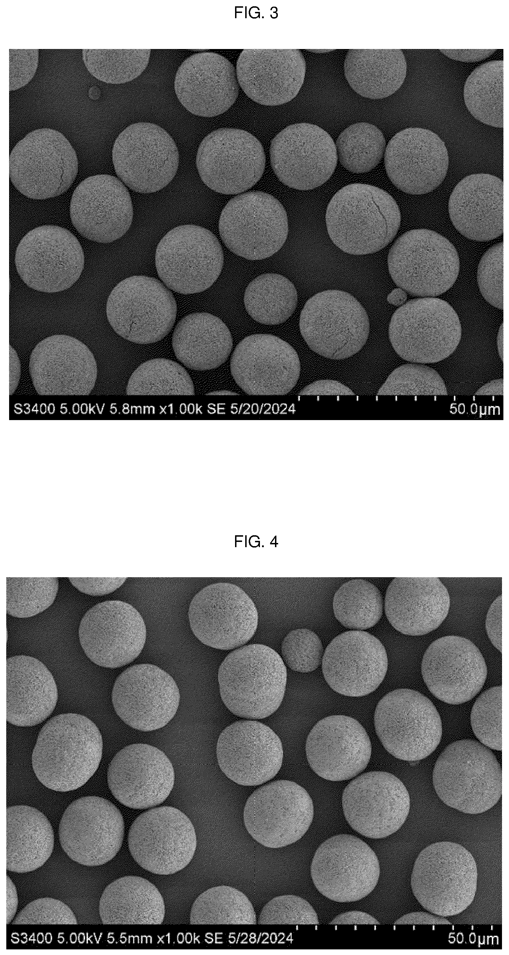

The present example provides an optimized repair method for cracks of a cathode material precursor. The cathode material precursor was a nickel-cobalt-manganese hydroxide precursor, and a molar ratio of Ni, Co and Mn was 83:5:12. The repair method included the following steps.
(1) When the particle size of the cathode material precursor in a reactor reached a D50 of 15 µm (an SEM image of the cathode material precursor before repair was shown in FIG. 3), feeding was stopped, stirring was turned off, nitrogen protection was turned on to make an oxygen content in the reactor lower than 1.5%, a stirring rotation speed of the reactor was decreased to 120 rpm, and the temperature of the reactor was raised to 65°C.
(2) A repair solution, that is, a mixed solution of a sodium hydroxide solution and an ascorbic acid solution, was added into the reactor to perform first surface crack repair on a material to be repaired, wherein a feed ratio of the repair solution to the material to be repaired was 3 mL:1 L, a concentration of the alkaline solution in the repair solution was 9 mol/L, a concentration of the antioxidant in the repair solution was 4 mol/L, a volume ratio of the sodium hydroxide solution to the ascorbic acid solution was 4:1 to make a concentration of hydroxide ions in the mixed system reach 0.5 g/L, and a time of the first surface crack repair was 36 h.
(3) An ammonia solution at a concentration of 9 mol/L and an ammonium sulfate solution at a concentration of 3 mol/L were added into the reactor to perform second surface crack repair on the material to be repaired, wherein a feed ratio of the mixed solution of the ammonia solution and the ammonium sulfate solution to the material to be repaired was 30 mL:1 L, and a volume ratio of the ammonia solution to the ammonium sulfate solution was 3:7 to make a concentration of ammonium ions in the mixed system maintained at 5 g/L, that is, the ammonia concentration under reaction conditions.
(4) Optimized repair was performed on the cracks for 32 h at a temperature of 65°C and a stirring rate of 120 rpm, and the repair was stopped when the surface cracks of the cathode material precursor disappeared (an SEM image of the cathode material precursor after repair was shown in FIG. 4).

As can be seen from the comparison between FIG. 3 and FIG. 4, the surface cracks of the cathode material precursor after repair completely disappear, and the spherical particle morphology is still maintained good, indicating that the repair method provided in the present example has a good optimized repair effect on the cracks.

### Example 3

The present example provides an optimized repair method for cracks of a cathode material precursor. The cathode material precursor was a nickel-cobalt-manganese hydroxide precursor, and a molar ratio of Ni, Co and Mn was 92:5:3. The repair method included the following steps.
(1) When the particle size of the cathode material precursor in a reactor reached a D50 of 13 µm, feeding was stopped, stirring was turned off, nitrogen protection was turned on to make an oxygen content in the reactor lower than 1.5%, a stirring rotation speed of the reactor was decreased to 150 rpm, and the temperature of the reactor was raised to 55°C.
(2) A repair solution, that is, a mixed solution of a sodium hydroxide solution and an ascorbic acid solution, was added into the reactor to perform first surface crack repair on a material to be repaired, wherein a feed ratio of the repair solution to the material to be repaired was 3 mL:1 L, a concentration of the alkaline solution in the repair solution was 9 mol/L, a concentration of the antioxidant in the repair solution was 4 mol/L, a volume ratio of the sodium hydroxide solution to the ascorbic acid solution was 4:1 to make a concentration of hydroxide ions in the mixed system reach 0.5 g/L, and a time of the first surface crack repair was 24 h.
(3) An ammonia solution at a concentration of 9 mol/L and an ammonium sulfate solution at a concentration of 3 mol/L were added into the reactor to perform second surface crack repair on the material to be repaired, wherein a feed ratio of the mixed solution of the ammonia solution and the ammonium sulfate solution to the material to be repaired was 30 mL:1 L, and a volume ratio of the ammonia solution to the ammonium sulfate solution was 3:7 to make a concentration of ammonium ions in the mixed system maintained at 5 g/L, that is, the ammonia concentration under reaction conditions.
(4) Optimized repair was performed on the cracks for 35 h at a temperature of 55°C and a stirring rate of 150 rpm, and the repair was stopped when the surface cracks of the cathode material precursor disappeared.

### Example 4

The present example provides an optimized repair method for cracks of a cathode material precursor. The cathode material precursor was a nickel-cobalt-manganese hydroxide precursor, and a molar ratio of Ni, Co and Mn was 92:5:3. The repair method included the following steps.
(1) When the particle size of the cathode material precursor in a reactor reached a D50 of 13 µm, feeding was stopped, stirring was turned off, nitrogen protection was turned on to make an oxygen content in the reactor lower than 1.5%, a stirring rotation speed of the reactor was decreased to 80 rpm, and the temperature of the reactor was raised to 85°C.
(2) A repair solution, that is, a mixed solution of a sodium hydroxide solution and an ascorbic acid solution, was added into the reactor to perform first surface crack repair on a material to be repaired, wherein a feed ratio of the repair solution to the material to be repaired was 3 mL:1 L, a concentration of the alkaline solution in the repair solution was 9 mol/L, a concentration of the antioxidant in the repair solution was 4 mol/L, a volume ratio of the sodium hydroxide solution to the ascorbic acid solution was 4:1 to make a concentration of hydroxide ions in the mixed system reach 0.5 g/L, and a time of the first surface crack repair was 24 h.
(3) An ammonia solution at a concentration of 9 mol/L and an ammonium sulfate solution at a concentration of 3 mol/L were added into the reactor to perform second surface crack repair on the material to be repaired, wherein a feed ratio of the mixed solution of the ammonia solution and the ammonium sulfate solution to the material to be repaired was 30 mL:1 L, and a volume ratio of the ammonia solution to the ammonium sulfate solution was 3:7 to make a concentration of ammonium ions in the mixed system maintained at 5 g/L, that is, the ammonia concentration under reaction conditions.
(4) Optimized repair was performed on the cracks for 30 h at a temperature of 85°C and a stirring rate of 80 rpm, and the repair was stopped when the surface cracks of the cathode material precursor disappeared.

### Example 5

The present example provides an optimized repair method for cracks of a cathode material precursor. The cathode material precursor was a nickel-cobalt-manganese hydroxide precursor, and a molar ratio of Ni, Co and Mn was 92:5:3. The repair method included the following steps.
(1) When the particle size of the cathode material precursor in a reactor reached a D50 of 13 µm, feeding was stopped, stirring was turned off, nitrogen protection was turned on to make an oxygen content in the reactor lower than 1.5%, a stirring rotation speed of the reactor was decreased to 120 rpm, and the temperature of the reactor was raised to 65°C.
(2) A repair solution, that is, a mixed solution of a sodium carbonate solution and a sodium thiosulfate solution, was added into the reactor to perform first surface crack repair on a material to be repaired, wherein a feed ratio of the repair solution to the material to be repaired was 1 mL:1 L, a concentration of the alkaline solution in the repair solution was 10 mol/L, a concentration of the antioxidant in the repair solution was 5 mol/L, a volume ratio of the sodium hydroxide solution to the ascorbic acid solution was 0.25:1, and a time of the first surface crack repair was 12 h.
(3) An ammonia solution at a concentration of 9 mol/L and an ammonium sulfate solution at a concentration of 3 mol/L were added into the reactor to perform second surface crack repair on the material to be repaired, wherein a feed ratio of the mixed solution of the ammonia solution and the ammonium sulfate solution to the material to be repaired was 10 mL:1 L, and a volume ratio of the ammonia solution to the ammonium sulfate solution was 3:7 to make a concentration of ammonium ions in the mixed system maintained at 5 g/L, that is, the ammonia concentration under reaction conditions.
(4) Optimized repair was performed on the cracks for 36 h at a temperature of 65°C and a stirring rate of 120 rpm, and the repair was stopped when the surface cracks of the cathode material precursor disappeared.

### Example 6

The present example provides an optimized repair method for cracks of a cathode material precursor. The cathode material precursor was a nickel-cobalt-manganese hydroxide precursor, and a molar ratio of Ni, Co and Mn was 92:5:3. The repair method included the following steps.
(1) When the particle size of the cathode material precursor in a reactor reached a D50 of 13 µm, feeding was stopped, stirring was turned off, nitrogen protection was turned on to make an oxygen content in the reactor lower than 1.5%, a stirring rotation speed of the reactor was decreased to 120 rpm, and the temperature of the reactor was raised to 65°C.
(2) A repair solution, that is, a mixed solution of a potassium hydroxide solution and a sodium D-isoascorbate solution, was added into the reactor to perform first surface crack repair on a material to be repaired, wherein a feed ratio of the repair solution to the material to be repaired was 4 mL:1 L, a concentration of the alkaline solution in the repair solution was 8 mol/L, a concentration of the antioxidant in the repair solution was 3 mol/L, a volume ratio of the sodium hydroxide solution to the ascorbic acid solution was 4:1, and a time of the first surface crack repair was 36 h.
(3) An ammonia solution at a concentration of 9 mol/L and an ammonium sulfate solution at a concentration of 3 mol/L were added into the reactor to perform second surface crack repair on the material to be repaired, wherein a feed ratio of the mixed solution of the ammonia solution and the ammonium sulfate solution to the material to be repaired was 50 mL:1 L, and a volume ratio of the ammonia solution to the ammonium sulfate solution was 3:7 to make a concentration of ammonium ions in the mixed system maintained at 5 g/L, that is, the ammonia concentration under reaction conditions.
(4) Optimized repair was performed on the cracks for 12 h at a temperature of 65°C and a stirring rate of 120 rpm, and the repair was stopped when the surface cracks of the cathode material precursor disappeared.

### Example 7

The present example provides an optimized repair method for cracks of a cathode material precursor. The cathode material precursor was a nickel-cobalt-manganese hydroxide precursor, and a molar ratio of Ni, Co and Mn was 92:5:3. The repair method included the following steps.
(1) When the particle size of the cathode material precursor in a reactor reached a D50 of 13 µm, feeding was stopped, stirring was turned off, nitrogen protection was turned on to make an oxygen content in the reactor lower than 1.5%, a stirring rotation speed of the reactor was decreased to 120 rpm, and the temperature of the reactor was raised to 65°C.
(2) A repair solution, that is, a mixed solution of a sodium hydroxide solution and an ascorbic acid solution, was added into the reactor to perform first surface crack repair on a material to be repaired, wherein a feed ratio of the repair solution to the material to be repaired was 3 mL:1 L, a concentration of the alkaline solution in the repair solution was 9 mol/L, a concentration of the antioxidant in the repair solution was 4 mol/L, a volume ratio of the sodium hydroxide solution to the ascorbic acid solution was 4:1 to make a concentration of hydroxide ions in the mixed system reach 0.5 g/L, and a time of the first surface crack repair was 24 h.
(3) An ammonia solution at a concentration of 12 mol/L and an ammonium sulfate solution at a concentration of 1 mol/L were added into the reactor to perform second surface crack repair on the material to be repaired, wherein a feed ratio of the mixed solution of the ammonia solution and the ammonium sulfate solution to the material to be repaired was 30 mL:1 L, and a volume ratio of the ammonia solution to the ammonium sulfate solution was 1:9.
(4) Optimized repair was performed on the cracks for 32 h at a temperature of 65°C and a stirring rate of 120 rpm, and the repair was stopped when the surface cracks of the cathode material precursor disappeared.

### Example 8

The present example provides an optimized repair method for cracks of a cathode material precursor. The cathode material precursor was a nickel-cobalt-manganese hydroxide precursor, and a molar ratio of Ni, Co and Mn was 92:5:3. The repair method included the following steps.
(1) When the particle size of the cathode material precursor in a reactor reached a D50 of 13 µm, feeding was stopped, stirring was turned off, nitrogen protection was turned on to make an oxygen content in the reactor lower than 1.5%, a stirring rotation speed of the reactor was decreased to 120 rpm, and the temperature of the reactor was raised to 65°C.
(2) A repair solution, that is, a mixed solution of a sodium hydroxide solution and an ascorbic acid solution, was added into the reactor to perform first surface crack repair on a material to be repaired, wherein a feed ratio of the repair solution to the material to be repaired was 3 mL:1 L, a concentration of the alkaline solution in the repair solution was 9 mol/L, a concentration of the antioxidant in the repair solution was 4 mol/L, a volume ratio of the sodium hydroxide solution to the ascorbic acid solution was 4:1 to make a concentration of hydroxide ions in the mixed system reach 0.5 g/L, and a time of the first surface crack repair was 24 h.
(3) An ammonia solution at a concentration of 8 mol/L and an ammonium sulfate solution at a concentration of 3 mol/L were added into the reactor to perform second surface crack repair on the material to be repaired, wherein a feed ratio of the mixed solution of the ammonia solution and the ammonium sulfate solution to the material to be repaired was 30 mL:1 L, and a volume ratio of the ammonia solution to the ammonium sulfate solution was 3:7.
(4) Optimized repair was performed on the cracks for 32 h at a temperature of 65°C and a stirring rate of 120 rpm, and the repair was stopped when the surface cracks of the cathode material precursor disappeared.

### Comparative Example 1

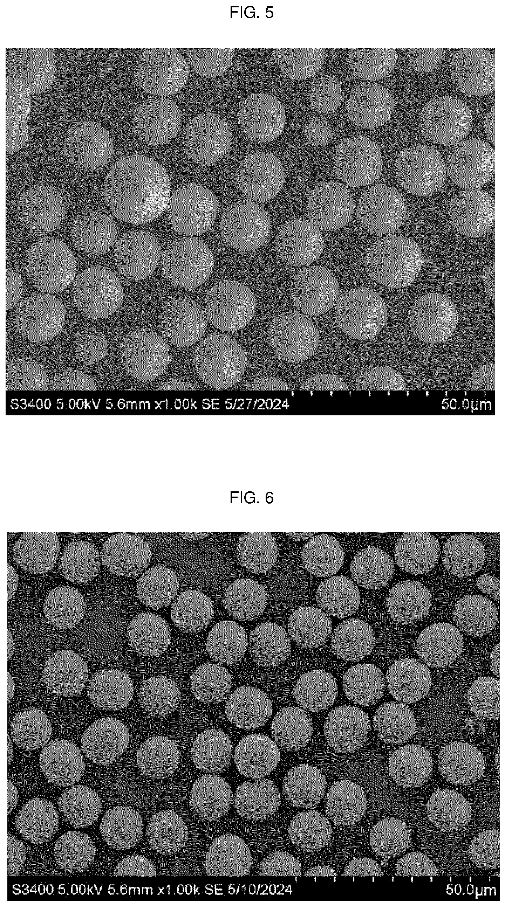

A repair method for cracks of a cathode material precursor is provided. The cathode material precursor was a nickel-cobalt-manganese hydroxide precursor, and a molar ratio of Ni, Co and Mn was 92:5:3. The repair method included the following steps.
(1) When the particle size of the cathode material precursor in a reactor reached a D50 of 13 µm (an SEM image of the cathode material precursor before repair was shown in FIG. 1), feeding was stopped, stirring was turned off, nitrogen protection was turned on to make an oxygen content in the reactor lower than 1.5%, a stirring rotation speed of the reactor was decreased to 120 rpm, and the temperature of the reactor was raised to 65°C.
(2) An ammonia solution at a concentration of 9 mol/L was added into the reactor to make a concentration of ammonium ions in the mixed system maintained at 5 g/L, that is, the ammonia concentration under reaction conditions.
(3) Optimized repair was performed on the cracks for 32 h at a temperature of 65°C and a stirring rate of 120 rpm, and a surface of the cathode material precursor still had cracks (an SEM image of the cathode material precursor after repair was shown in FIG. 5).

As can be seen from the comparison between FIG. 1 and FIG. 5, under the condition of not adding the alkaline solution, the surface crack repair ratio of the cathode material precursor is decreased. Although the spherical particle morphology is still maintained good, some particles still have the phenomenon of surface cracks, and the repair effect is relatively poor, indicating that the repair method for surface cracks of a cathode material precursor in the present comparative example is ineffective.

### Comparative Example 2

A repair method for cracks of a cathode material precursor is provided. The cathode material precursor was a nickel-cobalt-manganese hydroxide precursor, and a molar ratio of Ni, Co and Mn was 92:5:3. The repair method included the following steps.
(1) When the particle size of the cathode material precursor in a reactor reached a D50 of 13 µm (an SEM image of the cathode material precursor before repair was shown in FIG. 1), feeding was stopped, stirring was turned off, nitrogen protection was turned on to make an oxygen content in the reactor lower than 1.5%, a stirring rotation speed of the reactor was decreased to 120 rpm, and the temperature of the reactor was raised to 65°C.
(2) A repair solution, that is, a mixed solution of a sodium hydroxide solution and an ascorbic acid solution, was added into the reactor to perform first surface crack repair on a material to be repaired, wherein a feed ratio of the repair solution to the material to be repaired was 3 mL:1 L, a concentration of the alkaline solution in the repair solution was 9 mol/L, a concentration of the antioxidant in the repair solution was 4 mol/L, a volume ratio of the sodium hydroxide solution to the ascorbic acid solution was 4:1 to make a concentration of hydroxide ions in the mixed system reach 0.5 g/L, and a time of the first surface crack repair was 24 h.
(3) Optimized repair was performed on the cracks for 32 h at a temperature of 65°C and a stirring rate of 120 rpm, and a surface of the cathode material precursor still had cracks (an SEM image of the cathode material precursor after repair was shown in FIG. 6).

As can be seen from the comparison between FIG. 1 and FIG. 6, under the condition of not adding the mixed solution of the ammonia solution and the ammonium sulfate solution to perform the second surface crack repair, the surface crack repair ratio of the cathode material precursor is decreased. Although the spherical particle morphology is still maintained good, some particles still have the phenomenon of surface cracks, and the repair effect is relatively poor, indicating that the repair method for surface cracks of a cathode material precursor in the present comparative example cannot fully achieve complete repair of the surface cracks of the cathode material precursor.

### Comparative Example 3

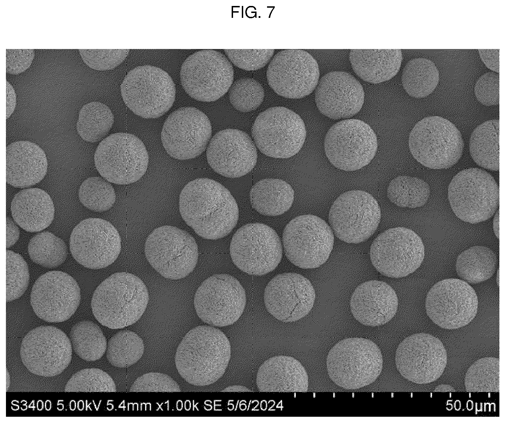

A repair method for cracks of a cathode material precursor is provided. The cathode material precursor was a nickel-cobalt-manganese hydroxide precursor, and a molar ratio of Ni, Co and Mn was 92:5:3. The repair method included the following steps.
(1) When the particle size of the cathode material precursor in a reactor reached a D50 of 13 µm (an SEM image of the cathode material precursor before repair was shown in FIG. 1), feeding was stopped, stirring was turned off, nitrogen protection was turned on to make an oxygen content in the reactor lower than 1.5%, a stirring rotation speed of the reactor was decreased to 120 rpm, and the temperature of the reactor was raised to 65°C.
(2) A sodium hydroxide solution was added into the reactor to perform first surface crack repair on a material to be repaired, wherein a feed ratio of the sodium hydroxide solution to the material to be repaired was 3 mL:1 L, a concentration of the sodium hydroxide solution was 9 mol/L to make a concentration of hydroxide ions in the mixed system reach 0.5 g/L, and a time of the first surface crack repair was 24 h.
(3) An ammonia solution at a concentration of 9 mol/L and an ammonium sulfate solution at a concentration of 3 mol/L were added into the reactor to perform second surface crack repair on the material to be repaired, wherein a feed ratio of the mixed solution of the ammonia solution and the ammonium sulfate solution to the material to be repaired was 30 mL:1 L, and a volume ratio of the ammonia solution to the ammonium sulfate solution was 3:7 to make a concentration of ammonium ions in the mixed system maintained at 5 g/L, that is, the ammonia concentration under reaction conditions.
(4) Optimized repair was performed on the cracks for 32 h at a temperature of 65°C and a stirring rate of 120 rpm, a partial surface of the cathode material precursor was collapsed and cracked, and a partial surface of the cathode material precursor still had cracks (an SEM image of the cathode material precursor after repair was shown in FIG. 7).

As can be seen from the comparison between FIG. 1 and FIG. 7, under the condition of not adding the antioxidant solution in the first surface crack repair process, the surface crack repair ratio of the cathode material precursor is decreased. Some particles still have the phenomenon of surface cracks, and surfaces of some particles of the cathode material precursor undergo collapse and sphere cracking, thus losing the original spherical particle morphology.

The cathode material precursors after repair in the above examples and comparative examples were tested. Results were shown in Table 1.

### Test methods:

D50: Malvern MS3000 laser particle size analyzer.
Particle size distribution (D90-D10)/D50: Malvern MS3000 laser particle size analyzer.
Tap density: Powder tap density tester.
Specific surface area: Full-automatic nitrogen adsorption specific surface area analyzer.
Porosity: Argon ion polishing image method.
Sphere cracking rate: Volume proportion of particles with cracks observed under a microscope.

**Table 1**

| | | | | | | |
|---|---|---|---|---|---|---|
| | | | | | | |

| / | D50 | Particle size distribution (D90-D10)/D50 | Tap density | Specific surface area | Porosity | Sphere cracking rate |
|---|---|---|---|---|---|---|
| | µm | / | g/cm³ | m²/g | % | % |
| Example 1 | 13.213 | 0.618 | 2.00 | 14.54 | 20.05 | 0 |
| Example 2 | 16.135 | 0.620 | 2.08 | 7.52 | 11.21 | 0 |
| Example 3 | 13.217 | 0.613 | 2.00 | 10.49 | 13.53 | 0 |
| Example 4 | 13.179 | 0.614 | 2.04 | 10.32 | 14.25 | 0 |
| Example 5 | 13.251 | 0.617 | 2.01 | 11.25 | 15.45 | 0 |
| Example 6 | 13.205 | 0.618 | 2.03 | 10.78 | 12.77 | 0 |
| Example 7 | 13.188 | 0.616 | 2.02 | 10.59 | 11.29 | 0 |
| Example 8 | 13.214 | 0.618 | 2.00 | 11.02 | 13.26 | 0 |
| Comparative Example 1 | 13.268 | 0.620 | 2.00 | 10.69 | 12.26 | 20.03 |
| Comparative Example 2 | 13.243 | 0.619 | 2.02 | 10.93 | 13.54 | 16.22 |
| Comparative Example 3 | 13.118 | 0.616 | 2.01 | 10.56 | 11.27 | 18.14 |

As can be seen from the above, compared with comparative examples, the optimized repair methods for cracks in various examples of the present application can achieve complete repair of the surface cracks of the cathode material precursor through two surface crack repair processes, thereby increasing the qualification rate of the cathode material precursor. Moreover, an impact on the performance of a cathode material due to sphere cracking of the cathode material precursor can be effectively avoided. In addition, it can be seen that when various process parameters are within preferred ranges in the present application, the material has better comprehensive performance.

The basic principles, main features and advantages of the present application are described in the above examples. It should be understood by persons skilled in the art that the present application is not limited to the above examples, the above examples and description in the specification are only to illustrate the principles of the present application, the present application will have various changes and improvements without departing from the scope of the principles of the present application, and all the changes and improvements fall within the scope of protection of the present application.

## Claims

1. An optimized repair method for surface cracks of a cathode material precursor, wherein the method comprises the following specific steps:
step S1, when the particle size of the cathode material precursor reaches a target particle size in the process of preparing the cathode material precursor by a co-precipitation reaction, stopping the reaction to obtain a material in a reactor as a material to be repaired;
step S2, introducing an inert protective gas into the reactor to make an oxygen content in the reactor lower than 1.5%;
step S3, decreasing a rotation speed of the reactor while raising the temperature of the reactor to 55-85°C;
step S4, adding a repair solution into the reactor to perform first surface crack repair on the material to be repaired, wherein the repair solution is a mixed solution of an alkaline solution and an antioxidant solution, the alkaline solution comprises one or more of a sodium hydroxide solution, a potassium hydroxide solution, a sodium carbonate solution, or a sodium bicarbonate solution, and the antioxidant solution comprises one or more of a sodium thiosulfate solution, a vitamin C solution, a sodium D-isoascorbate solution, an oxalic acid solution, a potassium borohydride solution, a sodium borohydride solution, or an ethanol solution; and
step S5, adding a mixed solution of an ammonia solution and an ammonium sulfate solution into the reactor to perform second surface crack repair on the material to be repaired.

2. The optimized repair method for surface cracks of a cathode material precursor according to claim 1, wherein in step S1, a chemical formula of the cathode material precursor is NiₓCo_{y}Mn_{1-x-y}M_{z}(OH)₂, wherein M is a doping element, M is selected from one or more of Ca, Mg, Zn, Co, Cu, Ti, Al, Sn, Zr, Mn, B, Sr, V, Cr, La, Yb, Ce, or Ac, 0 < x ≤ 0.9,0 < y ≤ 0.9,0 ≤ z ≤ 0.9.

3. The optimized repair method for surface cracks of a cathode material precursor according to claim 1 or 2, wherein in step S2, the inert protective gas comprises one or more of nitrogen, helium, or argon.

4. The optimized repair method for surface cracks of a cathode material precursor according to any one of claims 1 to 3, wherein in step S3, the rotation speed of the reactor is decreased to a linear speed of 80-150 rpm based on an original rotation speed of the reactor.

5. The optimized repair method for surface cracks of a cathode material precursor according to any one of claims 1 to 4, wherein in step S4, a feed ratio of the repair solution to the material to be repaired is 1-4 mL:1 L.

6. The optimized repair method for surface cracks of a cathode material precursor according to any one of claims 1 to 5, wherein in step S4, a concentration of the alkaline solution in the repair solution is 8-10 mol/L.

7. The optimized repair method for surface cracks of a cathode material precursor according to any one of claims 1 to 6, wherein in step S4, a concentration of the antioxidant in the repair solution is 3-5 mol/L.

8. The optimized repair method for surface cracks of a cathode material precursor according to any one of claims 1 to 7, wherein in step S4, a volume percentage content of the alkaline solution in the repair solution is 20-80%, and the balance is the antioxidant.

9. The optimized repair method for surface cracks of a cathode material precursor according to any one of claims 1 to 8, wherein in step S4, a time of the first surface crack repair is 12-36 h.

10. The optimized repair method for surface cracks of a cathode material precursor according to any one of claims 1 to 9, wherein in step S5, a feed ratio of the mixed solution of the ammonia solution and the ammonium sulfate solution to the material to be repaired is 10-50 mL:1 L.

11. The optimized repair method for surface cracks of a cathode material precursor according to any one of claims 1 to 10, wherein in step S5, a volume percentage content of the ammonia solution in the mixed solution of the ammonia solution and the ammonium sulfate solution is 10-30%, and the balance is the ammonium sulfate solution.

12. The optimized repair method for surface cracks of a cathode material precursor according to any one of claims 1 to 11, wherein in step S5, a concentration of the ammonia solution is 8-12 mol/L.

13. The optimized repair method for surface cracks of a cathode material precursor according to any one of claims 1 to 12, wherein in step S5, a concentration of the ammonium sulfate solution is 1-3 mol/L.

14. The optimized repair method for surface cracks of a cathode material precursor according to any one of claims 1 to 13, wherein in step S5, a time of the second surface crack repair is 12-36 h.

15. The optimized repair method for surface cracks of a cathode material precursor according to any one of claims 1 to 14, wherein in step S5, a D50 of the cathode material precursor after the second surface crack repair is 4-20 µm, particle size distribution satisfies (D90-D10)/D50<0.70, a tap density is greater than 1.80 g/cm³, a specific surface area is 5-15 m²/g, and a porosity is 10-60%.
